**Europäisches Patentamt**

**European Patent Office**

**Office européen des brevets**

(19)

(11) Publication number : **0 421 844 B1**

(12)

# EUROPEAN PATENT SPECIFICATION

(45) Date of publication of patent specification :
**30.03.94 Bulletin 94/13**

(51) Int. Cl.⁵ : **G01V 5/10,** G01F 1/708

(21) Application number : **90402661.4**

(22) Date of filing : **27.09.90**

(54) Nuclear oxygen activation method and apparatus for detecting and quantifying water flow.

(30) Priority : **02.10.89 US 415934**

(43) Date of publication of application :
**10.04.91 Bulletin 91/15**

(45) Publication of the grant of the patent :
**30.03.94 Bulletin 94/13**

(84) Designated Contracting States :
**DE DK FR GB IT NL**

(56) References cited :
**US-A- 3 603 795**
**US-A- 4 574 193**
**TRANSACTIONS OF THE SPWLA 27TH ANNU-**
**AL LOGGING SYMPOSIUM, vol. 2, June 9-13,**
**1986, Houston, Texas; W.H.M DE ROSSET;**
**"Examples of detection of water flow by**
**oxygen activation on pulsed neutron logs",**
**pages 1-25**

(73) Proprietor : **SCHLUMBERGER LIMITED**
**277 Park Avenue**
**New York, N.Y. 10172 (US)**
(84) **GB**

Proprietor : **SERVICES PETROLIERS**
**SCHLUMBERGER, (formerly Société de**
**Prospection Electrique Schlumberger)**
**42, rue Saint-Dominique**
**F-75007 Paris (FR)**
(84) **FR**
Proprietor : **SCHLUMBERGER TECHNOLOGY**
**B.V.**
**Carnegielaan 2**
**NL-2517 KB Den Haag (NL)**
(84) **DE DK IT**
Proprietor : **SCHLUMBERGER HOLDINGS**
**LIMITED**
**P.O. Box 71, Craigmuir Chambers**
**Road Town, Tortola (VG)**
(84) **NL**

(72) Inventor : **McKeon, Donald**
**14507 River Forest**
**Houston, Texas 77079 (US)**
Inventor : **Olesen, Jean-Remy**
**1727 Creekside Dr.**
**Sugar Land, Texas 77479 (US)**
Inventor : **Scott, Hugh**
**1619 Rustic Knolls Dr.**
**Katy, Texas 77450 (US)**

(74) Representative : **Hagel, Francis et al**
**Etudes et Productions Schlumberger A**
**L'ATTENTION DU SERVICE BREVETS 26, rue**
**de la Cavée B.P. 202**
**F-92142 Clamart Cédex (FR)**

EP 0 421 844 B1

## Description

This invention relates generally to the detection and/or quantification of water flow, in particularly water flow which is not directly accessible, such as in a pipe, or water flow occurring in a borehole primarily designated to oil production. With this respect, the present invention can e.g. find application in the production logging techniques directed to the analysis of producing oil wells, or in the injection wells techniques for determining the mechanical integrity of such wells. The invention allows one to provide qualitative and quantitative information related to water flow in a borehole, such e.g. between the casing and the earth formation surrounding said borehole.

As known in the art of logging techniques, a well which has been determined to be promising for oil production, is provided with a metallic casing, and cement is injected between the earth formation and the casing. Perforations are then made through the casing/cement and in the oil productive formation, so as to allow oil to flow up to the surface through a tubing beforehand arranged in the well coaxially to the casing. It is of great importance to identify fluid points of entrance to or exit from the borehole, as well as to determine the mechanical integrity of the cement annulus. However, unwanted vertical flow of water can occur in the cement, between the casing and the formation. This phenomenon, usually called "water channeling", causes undesirable paths between formations located at different depths, i.e. at different pressures, e.g. by allowing water from a first formation layer to mix with oil coming from a second formation layer. This phenomenon disturbs substantially the oil production.

The invention may also be used, besides the production wells hereabove referred to, in the so-called "injection wells" which includes different categories of wells. In a first category, a high pressure fluid is injected in a first well so as to make the oil move in earth formation towards a neighboring second well which will become the oil producing well. A second category of well is used for disposing of either fluids associated with the production of oil (such as salt water), or liquid hazardous wastes. In both categories, it is important to determine the mechanical integrity of such wells so as to prevent the injected fluid from contaminating underground sources of drinking water. Such contamination is usually due to some cracks or channels in the cement annulus and/or in the formation close to the well wall. The injection wells are submitted to stringent regulations with this respect. In the United States, for example, the requirement is such that a test of the mechanical integrity of the well, so as to determine the presence of any leak, be done prior to initial injection and further periodically (every five years).

Among the various methods which have been proposed for detecting and characterizing water flow in a well, such as the flow behind casing, is the nuclear method referred to as "oxygen activation", as described e.g. in the article "Advances in nuclear production logging" by P.A Wichmann et al., Trans., SPWLA (1967). This method is carried out with a tool including a nuclear source emitting high energy neutrons and a gamma ray detector. Oxygen atoms in the water, when interacting with neutrons of sufficient energy, are activated to an unstable state in the form of nitrogen-16 which decays back exponentially in time with a half life of 7.13 seconds, to stable oxygen-16 while emitting 6.13 Mev and 7.12 Mev gamma rays. This reaction is also referred to as "$O^{16}(n,p)N^{16}$" reaction. Count rates in the gamma ray detector are proportional to the total amount of oxygen present around the tool.

An operative oxygen activation logging tool, as described in U.S. Patent 3,603,795 issued to Louis A. Allaud and assigned to Schlumberger Technology Corporation, has been proposed for measuring the speed of water in a polyphase flow, by setting the ratio of the counts referring to the respective near and far detectors.

Some attempts have been made towards a better understanding of the oxygen activation method, see e.g. the article "Quantitative Monitoring of Water Flow Behind and In Wellbore Casing" from D.M. Arnold and H.J. Paap, Journal of Petroleum Engineers of AIME, pages 121-130, January 1979. Based on these experiments, an operative logging tool provided with two detectors has been proposed, as depicted in the article "Measuring Behind Casing Water Flow" by T.M. Williams, presented on May 5-7, 1987 at the International Symposium on Subsurface Injection of Oilfield Brines, in New Orleans. The ratio of the counts from the respective near and far detectors is an exponential function of the velocity of the detected water flow. Some other quantitative information, i.e. the radial distance of the water flow and the volume flow rate are estimated through further calculations.

However, these known methods suffer from major drawbacks. Firstly, they require two detectors, which increases the cost. Secondly, the measurements require long measuring periods in the well, such as several minutes. Thirdly, a prior calibration is needed, even for the mere determination of the velocity of the water flow. In other words, the response of the tool has to be measured when submitted to given external conditions, i.e. to different flow velocities, flow rates, and radial distances of flow, so as to obtain a set of reference signals. These reference measurements, allegedly corresponding to stationary oxygen, are then subtracted from actual measurements. The calibration may be carried out either in a laboratory set-up especially built for that purpose, or in a region of the well assumed to be free of any water flow behind casing but otherwise showing characteristics identical to those of the region of the well under investigation. However, calibration is time consuming and thus costly, and, when carried out in the well, is relatively not reliable since there is no certainty that the region chosen as a reference is actually representative and free of any water leakage. Finally, these known methods are limited with respect to the velocity range of the water flow able to be detected with accuracy, especially in relatively low velocities, below e.g. 0.016 m/s (3 feet/minute). This is due in part to the limitations deriving from the calibration process hereabove described. This is all the more detrimental since the velocities of the water flow encountered in a well are often low, i.e. below 0.016m/s (3 feet/minute).

Furthermore, the oxygen activation method per se raises another difficulty. The emitted neutrons interact with, and thus activate, all of the oxygen atoms surrounding the tool, i.e. the "flowing oxygen" and the "immobile oxygen". The immobile oxygen is present in the earth formations, in the cement, and in the oxygen bearing fluid which is stationary. The flowing oxygen is the oxygen present in the fluids flowing either downward or upward. The above mentioned known methods attempt to differentiate the flowing oxygen from the immobile oxygen by establishing, through calibration, a set of reference data corresponding to the absence of flow. However, the calibration suffers from severe limitations already hereabove referred to with this respect.

There has been also some attempts to optimize the oxygen activation method by monitoring the tool speed in the well according to the water flow velocity, as e.g. depicted in the article "Examples of Detection of Water Flow by Oxygen Activation on Pulsed Neutron Logs" by W. H. M. DeRosset, in Paper CCC of SPWLA Twenty-seventh annual logging symposium, June 9-13, 1986. However, this method relies on the prior knowledge or estimation of the water flow velocity, and is further sensitive to the spacing between the source and the detectors.

U.S. Patent 4,574,193 shows a method wherein an oxygen activation tool is run twice in the well at two different logging speeds. The water velocity is derived from a displacement distance "D" which reflects the time required for the activated fluid to reach a detector. Nevertheless, the calculation is relatively complicated. Furthermore, this method requires the logging speed be less than the water velocity, which is a drastic limitation since it implies an a priori assumption of the velocity which is the data to be determined.

Many endeavors have been made to improve the oxygen activation method for the detection of water flow, either by combining the oxygen activation method with other logging methods (see e.g. U.S. Patents 3,817,328; 4,233,508 and 4,737,636), or with prior knowledge of environmental conditions (see e.g. U.S. Patent 4,032,781), or by designing the detectors with a specific geometry (see e.g. U.S. Patent 4,032,779), or further by setting up a relationship for the ratio of count rates at a detector in two distinct energy regions of the gamma ray spectrum (see e.g. U.S. Patent 4,032,778). All these methods show the drawbacks already referred to hereabove, since they do not depart in principle from the basic oxygen activation method hereabove discussed.

According to the above, there is a need for a reliable method for obtaining quantitative and qualitative information related to water flow, and in a specific application, to water flow behind casing, either for production well analysis or for mechanical integrity test in injection wells.

An object of the invention is an oxygen activation method and apparatus providing reliable quantitative and qualitative information on water flow, and especially providing the velocity of the water flow, through simple calculation and without any prior calibration.

Another object of the invention is to provide measurements irrespective of specific dimensions of the apparatus and/or of the displacement speed of the apparatus (i.e. the logging speed in well application) with respect to the flow.

A further object of the invention is to distinguish the flowing oxygen (related to the flow) from the stationary oxygen.

An even further object of the invention is to provide information through measurements of short duration, and to design an apparatus of reasonable length.

A still further object of the invention is to derive data from a single detector.

The foregoing and other objects are attained in accordance with the invention by a nuclear method for obtaining qualitative and quantitative information related to water flow, as set forth in claim 1.

Specifically, said deriving step includes detecting in said relationship, an anomaly or characteristic representative of the flow and departing from the exponential decay curve of N16 which is representative of the stationary oxygen.

Particularly, said deriving step further includes calculating the velocity "V" of the water flow from the formula

$$V = d / t,$$

where "d" is the distance between the source and the detecting location, and "t" is the time period between the irradiating step and the time corresponding to said characteristic in said relationship.

Advantageously, the method includes carrying out, at the same place with respect to the flow, several cycles of irradiating / detecting steps.

The method may include advantageously the step of determining the time corresponding to a peak representative of the flow in said relationship, and calculating the velocity of said flow from the time period between the mid-time of the irradiating step and the time corresponding to the maximum of said peak.

Furthermore, the method includes deriving the water flow rate "Q" from the formula:

$$Q = F \times C_{flow} / S_{total}$$

where $C_{flow}$ is the number of counts representative of the flow, $S_{total}$ is the total number of neutrons emitted during the irradiating step, and "F" is a function of environmental parameters and may also be a function of the velocity "V". $C_{flow}$ is preferably calculated as the area of said characteristic representative of the flow in said relationship.

The present invention also contemplates a nuclear apparatus for obtaining qualitative and quantitative information related to water flow, as set forth in claim 12.

The characteristics and advantages of the invention will appear better from the description to follow, given by way of a non limiting example, with reference to the appended drawing in which:

FIG. 1 is a block diagram of an example of application of the invention in the form of a logging tool including two detectors;

FIG. 2A and 2B show schematic plots of the count rate detected respectively by the near and far detector, versus time, during a first example of irradiating / detecting cycle;

FIG. 3A and 3B show respective plots similar to those of FIG. 2A and 2B corresponding to a second example of irradiating /detecting cycle;

FIG. 4A and 4B show respective plots similar to those of FIG. 2A and 2B corresponding to a third example of irradiating /detecting cycle;

FIG. 5A and 5B show respective histograms similar to the plots of FIG. 2A and 2B, corresponding to a fourth example of irradiating /detecting cycle;

FIG. 6 shows an histogram, similar to the plot of FIG. 2B (far detector) corresponding to a fifth example of irradiating /detecting cycle;

FIG. 7A, 7B, 7C show histograms similar to those of FIG. 5A (near detector) set for three different flow velocities; and

FIG. 8 show counts representative of the flow, plotted versus flow rate, as measured in a laboratory setup after an irradiating period of ten seconds, for a given cross section area of the flow.

The invention will be hereafter depicted in connection with the logging techniques, and especially with the detection and quantification of water flow behind casing in a borehole. However, it should be borne in mind that this is one of the many applications of the invention which, by way of example, could alternately be used for obtaining information on water flow, or water in a polyphase flow, in a pipe.

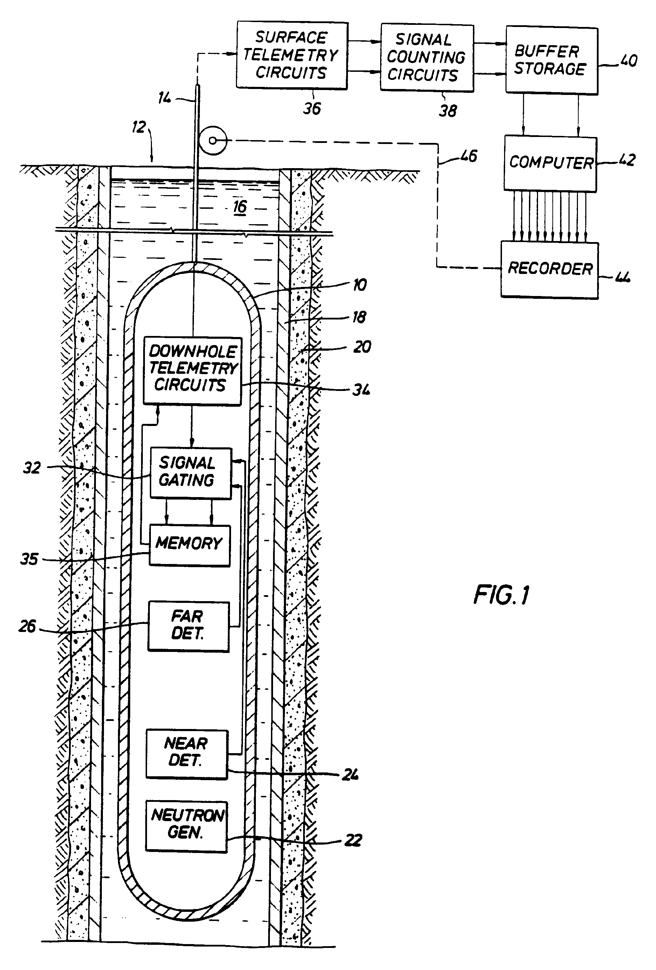

An example of an embodiment of the invention is described and illustrated herein FIG. 1 showing a spectroscopy logging tool 10 suspended in a borehole 12 by an armored cable 14. The tool 10 might be e.g. of the type described in U.S. patent 4,721,853, issued to Peter D. Wraight on Jan. 26, 1988 and assigned to Schlumberger Technology Corporation, and which is herein incorporated by reference.

FIG. 1 shows a well logging tool constructed in accordance with an example of embodiment of the invention and including a fluid-tight, pressure-and-temperature resistant sonde or tool 10 that is adapted to be suspended in and moved through a well bore 12 by an armored cable 14. The well bore 12 is illustrated as containing a borehole fluid 16 and as including a steel casing 18 and surrounding cement annulus 20. Although no tubing is shown in the borehole, the tool 10 may if desired be sized for through-tubing use.

The downhole tool 10 includes a pulsed neutron generator 22 and two radiation detectors 24 and 26 that are located at different distances (or spacings) from the neutron generator 22. The detector 24 spaced closest to the neutron generator is designated the "near" detector and the detector 26 located farther from the neutron source is designated the "far" detector. For the illustration of the present invention, the neutron generator 22 is of the type which generates discrete pulses of fast neutrons, e.g. 14 Mev, and may for example be of the types described in more complete detail in U.S. Pat. No. 2,991,364 to C. Goodman, dated July 4, 1961, and U.S. Pat. No. 3,546,512 to A.H. Frentrop, dated Dec. 8, 1970. This source emits 14 Mev neutrons having an energy level above the 10.2 Mev threshold energy level needed for the oxygen activation. Operation of the neutron generator 22 is controlled as usual by a neutron generator control circuit (not shown) which may also be of the type described in the aforementioned patents. The detectors 24 and 26 may be of any construction suitable for the detection of gamma rays, such as thallium-activated sodium iodide scintillation detectors or bismuth germanate crystal detectors, and, in this respect, will be understood to include the usual photomultiplier tubes, photomultiplier high voltage supplies, and amplifier-discriminators (not shown). It will also be understood that other downhole power sources (not shown are provided as required to drive the neutron generator 22 and other downhole circuits. Power for the well tool 10 is supplied over the cable 14 from a surface power supply (not shown), as is conventional.

Output pulses from the near detector 24 and the far detector 26 are applied to signal gating circuit 32 where the detector signals are counted and stored in memory and therefrom are applied to downhole telemetry circuits 34 for transmission to the surface over the cable 14. The overall design of the neutron generator control circuit, the signal gating circuits 32, the memory, and the telemetry circuits 34 are similar to that described in U.S. Pat. No. 4,721,853, but are not described here for the sake of brevity. These circuits are designed to achieve the timing schedules for neutrons emission and gamma rays detection according to that discussed in detail below.

The downhole telemetry circuits 34 may be of any known construction for encoding, time division multiplexing, or otherwise preparing the data-bearing signals. At the earth's surface, the data-bearing signals from the near and far detectors 24 and 26, respectively, are amplified, decoded, demultiplexed and otherwise processed as needed in the surface telemetry circuits 36, which may also be conventional. The telemetry circuits 34 and 36 also include circuits for the receipt and transmission, respectively, of command messages from the surface. Suitably, the circuits 34 and 36 comprise a bi-directional data telemetry system useful for these purposes and having at least a 10K bit per second upward data rate.

Following surface telemetry circuits 36, the near-detector and far-detector signals are separately counted in signal counting circuits 38 to acquire the counts data over a desired period of time, and then transferred to storage buffers 40.

From storage 40, the count data are processed in a computer 42, which suitably comprises a microprocessor or, alternatively, a general purpose digital computer such as that manufactured by Digital Equipment Corporation, Maynard, Mass., under the designation PDP-11. As is described more fully herebelow, the computer 42 processes the count data from the respective detectors to develop various desired outputs which may be recorded in conventional fashion as a function of tool depth in a recorder 44. The usual cable-following mechanical linkage, indicated diagrammatically at 46 in FIG. 1, is provided for this purpose.

As a matter of general interest, it is meant here by "downward fluid", fluid flowing downward in the borehole, and by "upward fluid", fluid flowing upward in the borehole. Generally, the method and apparatus according to the invention allow the distinction of the oxygen representative of the flowing oxygen (either upward or downward flow), from the immobile oxygen, i.e. part of stationary fluid, and/or cement, and/or earth formation. Accordingly, for the sake of brevity, "stationary oxygen" means, within the whole text of the present application, the immobile oxygen. In the example described, where the detector(s) is (are) placed above the source, the method of the invention will give results more sensitive to upward flow than to downward flow. This comprehends most of the situations since, in injection wells, the downward flow represents the fluid purposely injected in the well and thus is not the flow the user is interested in. Furthermore, the injected fluid (downward flow) usually has a much greater velocity than the upward flow. Finally, the injected fluid (downward) takes place inside the casing and it is unusual that a downward flow and an upward flow (representative of leakage in the cement for instance) both occur at the same location in a well. Consequently, in the examples here described, the flow under investigation is the upward flow. Accordingly, "flow", or "flow under investigation" will hereafter indicate "upward flow". It is easily understood that, should the user be primarily interested in downward flow, the tool should be run in the well in an inverted configuration, wherein the source is above the detector(s). In the same vein, "fluid" here refers to water or fluid comprised of a substantial amount of water.

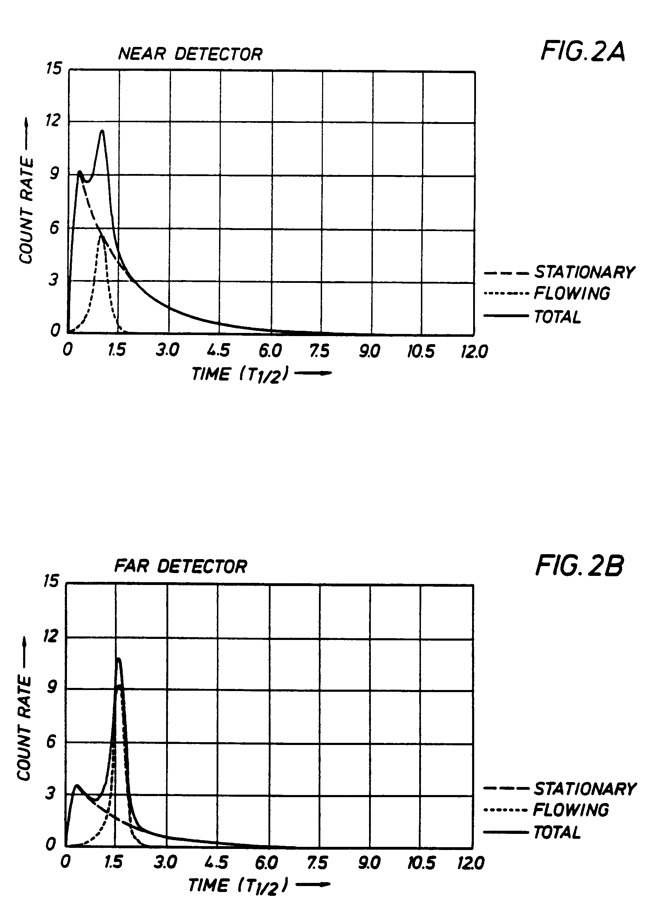

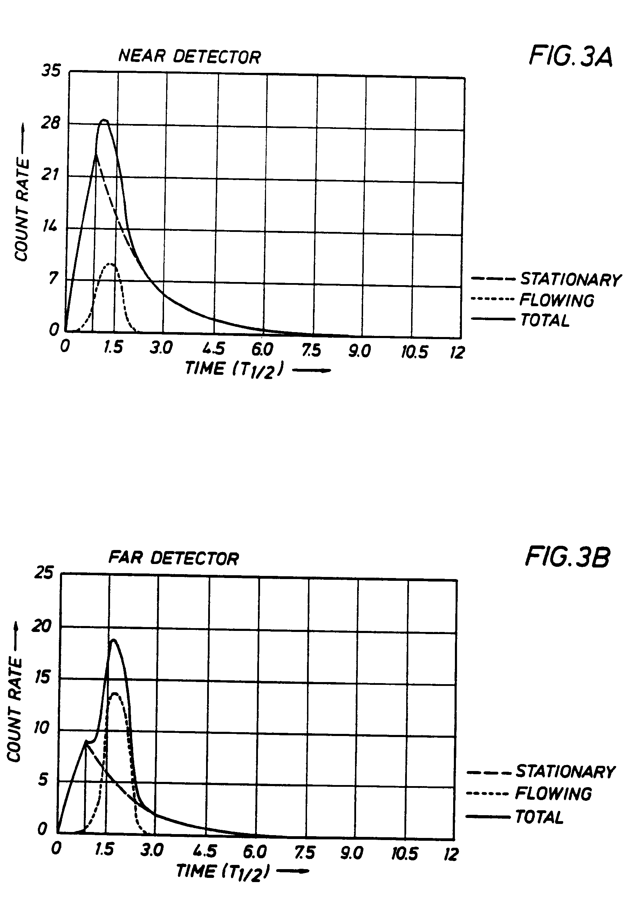

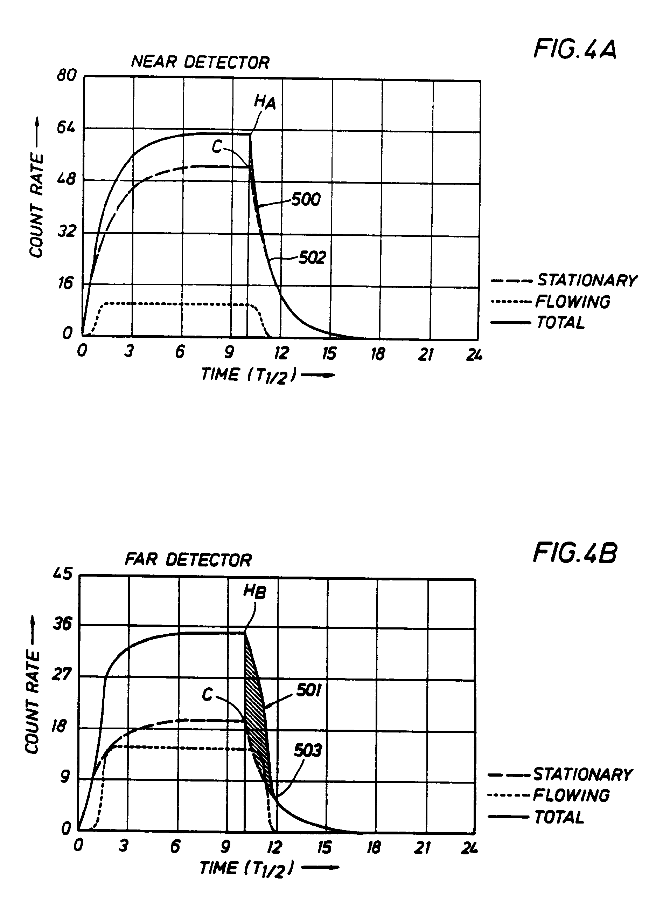

FIG. 2A, 2B, 3A, 3B, 4A and 4B, show each a plot of count rate versus time, resulting from calculations made from a simulation model including a source, a near detector and a far detector (all three in alignment), in the vicinity of which (and substantially parallel to which) is placed a water flow having a velocity of 11.5 feet/minute (0.05 m/s). FIG. 2A, 3A, 4A refer to the near detector, and FIG. 2B, 3B, 4B refer to the far detector. Each count rate is calculated as the number of counts detected during a time sample (called "bin") divided by the duration of said time sample. As a matter of general interest, the fact of plotting on the ordinate axis, either "counts" or "count rates", only implies a change of scale, and thus does not alter the spirit of the invention. Accordingly, and for the sake of brevity, the expression "counts versus time" will hereafter refer, unless otherwise specified, to count rates versus time. FIG. 2A, 2B correspond to an irradiating period of 2 seconds, FIG. 3A, 3B to an irradiating period of 5 seconds, and FIG. 4A, 4B to an irradiating period of 70 seconds. In FIG. 2A to 4B, the time units along the time axis are marked as multiples or fractions of half-life of $N^{16}$ (i.e. 7.12 seconds). Each plot on said figures includes a dashed curve, representative of the stationary oxygen, a dotted curve representative of the moving oxygen (i.e. the fluid flow), a solid curve corresponding to the total counts (as actually detected by the detector), and a vertical line marking the end of the irradiating period. The plots show "net" count rates, i.e. count rates from which have been removed the background noise (as explained hereafter).

Although the figures depict an embodiment including a near detector and a far detector, it is of importance to notice that the method according to the invention is based on the processing of counts obtained from a single detector. The use of two detectors is optional and corresponds to alternative embodiments of the invention.

According to a preferred embodiment of the invention, the source is activated for a given period of time and then is deactivated. The resulting gamma ray are detected and counts are processed during a detecting period which preferably immediately follows the irradiating period. Advantageously, the detecting period is slightly delayed (for less than one second) with respect to the end of the irradiation; this allows stabilizing the tool and reducing the influence of the downward flowing oxygen (i.e. in general the fluid flowing in a direction opposite to the detector with respect to the source). Specifically, information is derived from an anomaly or characteristic, representative of the flow, and departing from the $N^{16}$ exponential decay curve which is representative of the stationary oxygen. The detection duration is e.g. comprised between one and fifteen $N^{16}$ half-life(s).

Advantageously, the irradiation-detection cycle is preferably repeated several times, between e.g. five and thirty times, while the apparatus remains at the same place with respect to the water flow.

Turning back to FIG. 2A and 2B, the counts are measured after an irradiating period of about 2 seconds. Every slug of activated fluid under investigation, as it gets closer and closer to a detector, generates an increase of counts, and, as it moves away from said detector, causes a decrease of counts. After a time dependent upon the source/detector spacing and the flow velocity, said slug does not contribute anymore to the counts. The total counts curve (solid curve) comprises (i) a characteristic representative of the flow, in the form of a peak, and (ii) an exponential decay curve representative of the stationary oxygen. Said peak includes information about the flowing oxygen and thus about the flow. The peak on FIG. 2A appears in time before the peak on FIG. 2B, since said slug passes by the near detector before the far detector.

According to the invention, the presence of fluid flow in the vicinity of a single detector is responsible, on the plots, for an anomaly or characteristic departing from the $N^{16}$ exponential decay curve. The detection of the flow relies on the presence of such characteristic (i.e. a peak in the examples shown on FIG. 2A, 2B, 3A, 3B). The pictorial representation according to the invention, in the form of a plot of counts versus time, is vivid for the user who may, from a simple look at the plot, derive the presence of a flow. Above all, the method allows the determination of the water flow velocity "V" according to the simple formula V = d / t, where "d" is the distance between the source and the detector, and "t" is the time duration between the "irradiation or activation" and the "detection". More precisely, "t" could be defined as the difference between the mean time at which the flowing oxygen is activated and the mean time at which the flowing oxygen is detected. By way of example, starting from one plot of those of FIG. 2A 2B, 3A, 3B, i.e. using a tool provided with a single detector, "t" is the time between the mid-time of the irradiating period and the maximum of the peak. The maximum (or middle, or center, or centroid) of said peak can be determined by any usual mathematical methods.

It should be noted that, according to the invention, the calculation of the velocity "V" does not require any calibration.

As an alternative embodiment, based on the use of a tool provided with a near and a far detector, the velocity "V" is calculated from both plots of FIG. 2A, 2B (or from plots of FIG. 3A, 3B), by the formula V = d / t, where "d" is defined as the distance between the near detector and the far detector, and "t" is the time difference between the respective maxima of the peaks on the respective plots.

On each of FIG. 3A, 3B is shown a plot of counts versus time following an irradiating period of 6 seconds, for a water velocity identical to the one of FIG. 2A, 2B. On FIG. 3A and 3B, the respective peaks appear earlier in time, and are less sharp, than the respective peaks on FIG. 2A, 2B. The plots of FIG. 3A and 3B may be used in the same manner as described in connection with FIG. 2A, 2B, for the detection of the flow and the determination of the flow velocity.

Now there is further described another example of implementation of the invention in relation to FIG. 4A and 4B, each showing a plot of counts versus time for, respectively, a near and a far detector, in presence of a water flow having the same velocity as the one related to FIG. 2A, 2B, 3A, 3B, i.e. 11.5 feet/minute (0.05 m/s). The irradiating period is 70 seconds, and thus is substantially longer than the respective irradiating periods corresponding to the plots of FIG. 2A, 2B, 3A and 3B. Unlike the plots of the set of FIG. 2 or 3, the plots of FIG. 4A and 4B do not show any peak. In other words, the anomaly or characteristic representative of the flow takes a form other than a peak. Accordingly, the detection of flow and the calculation of velocity are implemented in an alternative way with respect to the one hereabove described in connection with FIG. 2A, 2B, 3A and 3B. The water flow is revealed on the plots by an enhanced part followed by an abrupt decrease of the counts (referenced by 500, 501). The expression "abrupt decrease" means a substantial change of slope or concavity with respect to the $N^{16}$ exponential decay curve representative of the stationary oxygen. The abrupt decrease is more visible on the far detector plot of FIG. 4B than on the near detector plot FIG. 4A. The water flow velocity "V" is calculated by the hereabove mentioned formula V = d / t, where "d" is the distance between the source and the detector (either near or far), and "t" is the time between the end of the irradiating period (symbolized by the vertical line) and the time corresponding to the point on the plot (bearing the re-

EP 0 421 844 B1

spective references 502, 503) corresponding to the end of said abrupt decrease, i.e. where the change of concavity occurs.

According to another embodiment further related to FIG. 4A and 4B and involving the use of two detectors, the velocity is calculated from both plots of FIG. 4A and 4B, from the formula $V = d / t$, where "d" is the distance between the near and the far detector, and "t" is the time period between said respective times 502, 503 corresponding to the respective end of said abrupt decreases.

As an alternative method, also making use of both near and far detector plots of FIG. 4A and 4B, the velocity is calculated in the following way. The contribution of the flowing oxygen to the total counts is calculated by extrapolating, back to the end of the irradiating period, the $N^{16}$ exponential decay curve. The extrapolation gives a number of counts "C" being the contribution of the stationary oxygen to the total counts. The contribution of the flowing oxygen is the difference between the stationary contribution and the total counts. The velocity "V" is derived from the ratio of the contributions of the flowing oxygen for the respective detectors.

It could be useful in some instances, to enhance the accuracy of the plots of FIG. 4A, 4B, especially in the very first counts detected following the irradiating period. As a matter of fact, these first counts (corresponding to points $H_A$ and $H_B$ on the plots) are greatly influenced by statistics phenomenon. For reducing the resulting incertitude, the detection is carried out during at least a part of the irradiation. To this end, the source is preferably of the bursting type, i.e. it emits successive bursts of neutrons. The counts are detected during the time intervals separating successive bursts of neutrons.

As a general comment relating to FIG. 4A, 4B, these plots are obtained after having activated the source for a time duration long enough to allow the counts to be in a steady state in time (see the horizontal part of the curve on the plots) for at least a few half-lifes, and then the source is turned off.

The comparison of FIG. 2A, 2B with FIG 3A, 3B and with FIG. 4A, 4B shows that the characteristic or anomaly, representative of the flow, takes different forms depending on the duration of the irradiation.

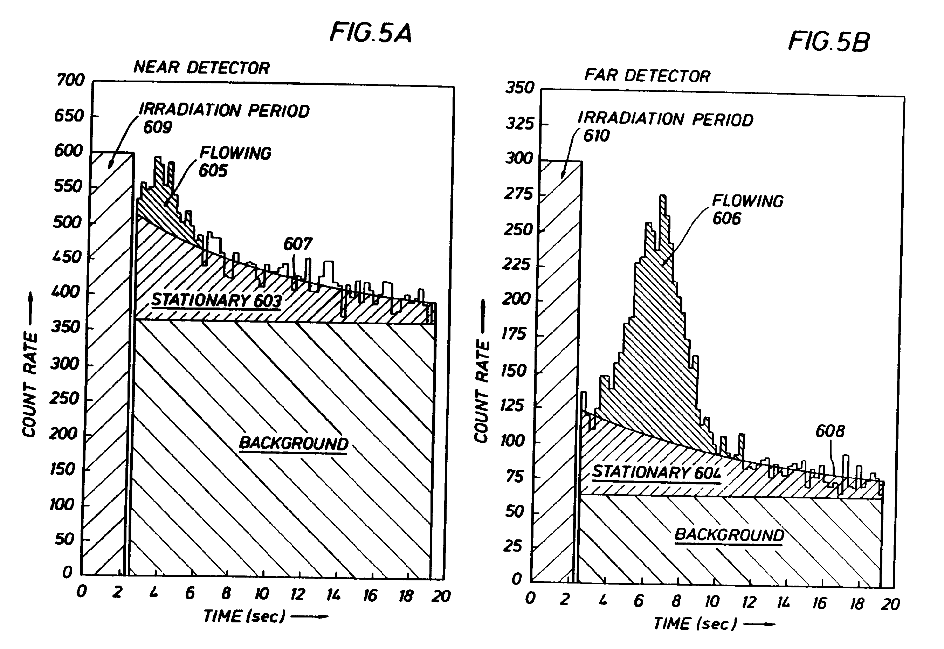

FIG. 5A and 5B each shows an histogram of counts versus time, where counts have been detected, during successive time samples (e.g. of a fourth of a second), respectively by the near detector and the far detector of a tool disposed in the vicinity of a water flow having a velocity of about 20 feet/minute (0.1 m/s). The irradiating period is of 2.2 seconds. Each histogram shows a square hatched area 600, 601 corresponding to the background counts, a shaded zone 603, 604 corresponding to the counts representative of the stationary oxygen, and a dark zone 605, 606 corresponding to the peak referred to in connection with FIG. 2A, 2B, 3A and 3B and which is representative of the flow. A rhombus hatched zone 609, 610 symbolizes the irradiating period. The height in counts of zones 609, 610 has no particular significance with respect to the water flow velocity. The shaded zones 603, 604 (stationary oxygen) are each delimited with the $N^{16}$ exponential decay curve (references 607, 608). Each exponential curve results: (i) in the part of the curve following in time the dark zone 605, 606 (upward flow) from an averaging of the corresponding histogram counts, and (ii) in the part of the curve preceding said dark zone 605, 606, from the "extrapolation" method hereabove described in connection with FIG. 4B. A preferred method for determining the respective values of the background "B", the extrapolation count number "C" (linked to stationary oxygen), and the peak value "P", consists in decomposing the gross count rate (as measured) into a constant profile representative of the background "B", the $N^{16}$ exponential decay curve representative of the stationary oxygen, and the flowing oxygen. This decomposition is carried out by a constrained weighted least-square algorithm which solves by minimizing, for each time interval, the following sum of the weighted squared errors "$E_i$" under a set of linear constraints:

$$\sum_{i=1}^{n} w_i E_i^2$$

subject to the following conditions:

$$R_i = B + C/t_{i+1/2} - t_{i-1/2} \int_{t_{i-1/2}}^{t_{i+1/2}} e^{-\lambda t} dt + D f(t_i) + E_i$$

and

$B >= 0$; $C >= 0$; $D >= 0$; and $f(t_i) >= 0$ for i=1,n

where "$R_i$" is the number of measured counts in time interval "i", "$t_i$" is the mean time of the i-th time interval measured from the end of the irradiating period, "$\lambda$" is the decay constant for $N^{16}$, "B" is the background composed of counts from gamma rays produced by radioactive components present in the cement and/or earth,

7

such as thorium, uranium and potassium, and iodine 128 when a sodium iodide detector is used,

$$"C \ e^{-\lambda t_i}"$$

is the number of counts in time interval "i" due to stationary oxygen, "D f($t_i$)" is the number of counts in time interval "i" due to flowing oxygen, and "$E_i$" is the residual for the i-th time interval, (i.e. the difference between the actual count rate and the predicted count rate). The constraints hereabove mentioned on "B", "C", "D" and f($t_i$) are given by way of example and could be changed without departing from the invention.

Generally speaking, in order to determine the velocity of the water flow, for a given distance between source and detector(s), the higher the water flow velocity, the shorter the irradiating period. As a matter of example, the distance between the source and the near detector is e.g. in the range of between half a foot and three feet (preferably about 1 foot [0.3 m]), and the distance between the source and the far detector is in the range of between one foot and six feet (preferably about 2 feet [0.61 m]). As a first approximation, for any water velocity less than 5 feet/minute (0.25 m/s), the irradiating period is preferably less than 15 seconds, while for water velocity greater than 20 feet/minute (0.6 m/s), the irradiating period is preferably about 2-3 seconds, it being understood that these numbers are only indicative. The relatively short spacing between the detector(s) and the source is a substantial advantage of the apparatus of the invention with respect to prior art, for at least three reasons. The first advantage is that it reduces the length of the apparatus which is easier to use. The second advantage is that it allows one to build an apparatus, of reasonable length, including two detectors on either side of the source, i.e. one detector above and the other below the source, so as to be sensitive both to upward and downward flow. The third advantage is that the apparatus is more sensitive to low fluid velocities, as will be explained hereafter.

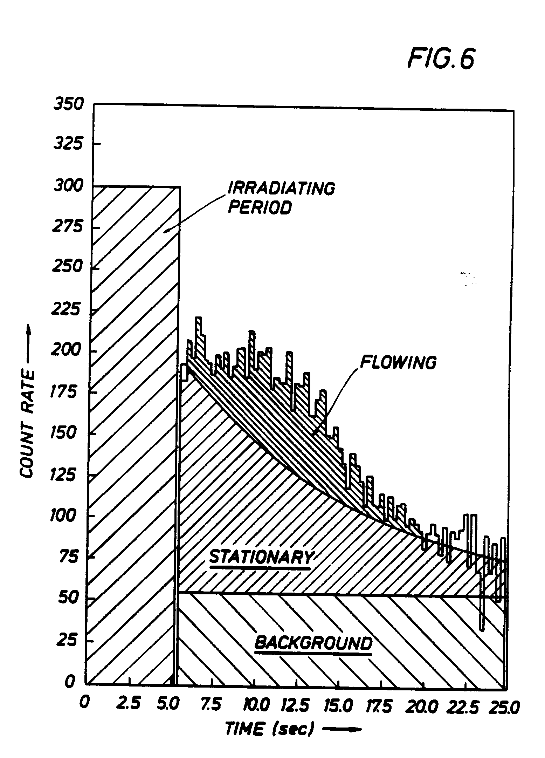

FIG. 6 shows an example of a histogram of counts detected by a near detector, following an irradiating period of 5.2 seconds. In that case, the velocity may be determined by combining both the "peak method" (FIG. 2A - 2B, 3A - 3B) and the "extrapolation method" (FIG. 4A, 4B) hereabove depicted.

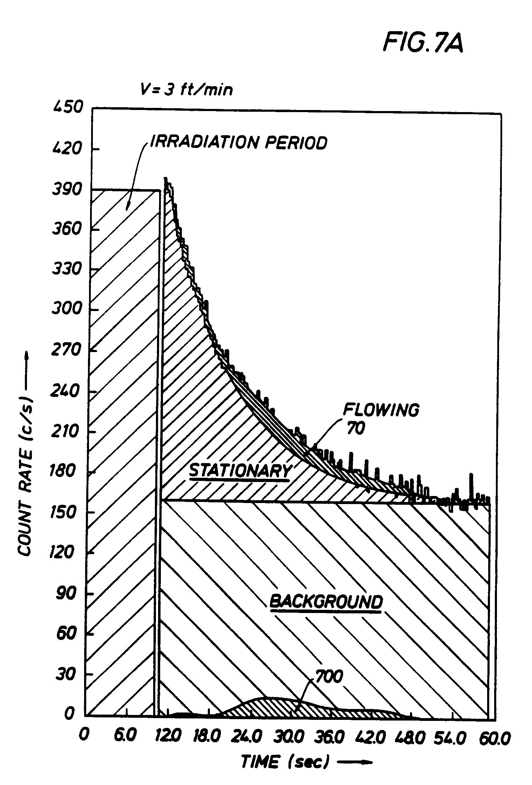

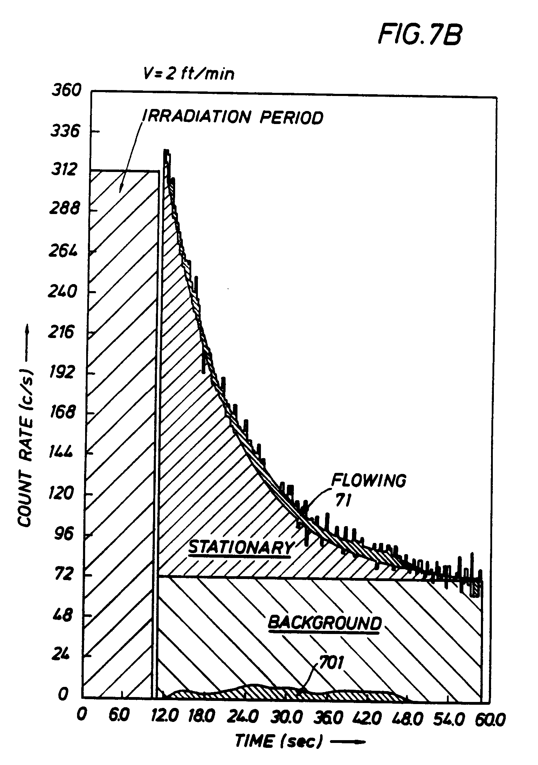

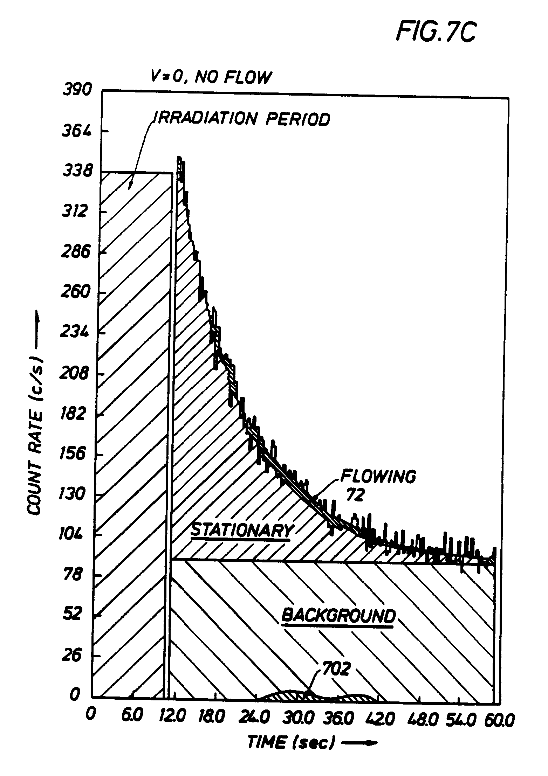

Moreover, the method and apparatus according to the present invention, besides the advantages already referred to, have the further advantage of being able to detect a larger range of flow velocity than the prior art, especially in the lower part of the range. This is all the more important since the water flows encountered in boreholes often have low velocities. FIG. 7A, 7B and 7C show each an histogram of counts versus time, detected by a far detector after an irradiating period of 10 seconds. FIG. 7A corresponds to a water flow velocity of 3 feet/minute (0.015 m/s), FIG. 7B to a velocity of 2 feet/minute (0.01 m/s) and FIG. 7C to a flow of no significant velocity or to no flow. Each histogram comprises different zones, similar to FIG. 2A to 5B, corresponding to the irradiating period, the background, the stationary oxygen, and the flowing oxygen. As can be seen from the histograms, the dark zone 70, 71, 72 representative of the flow is crescent shaped. However, these zones may not be descriptive enough for the user from the pictorial point of view, although they comprehend data representative of the flow. In order to ease further the interpretation of the counts representative of the flow, the characteristic curves are represented in another way at the bottom of the histograms, on the time axis, by an elongated dark area referenced respectively 700, 701 and 702. Each elongated dark zone 700, 701, 702 is made by assigning to each time sample, a count value corresponding to the "height" along a vertical line of the crescent shaped zone. Each elongated area 700, 701, 702, represented along the time axis is more vivid for the user from the graphical point of view. This alternate representation along the time axis, could also be made in connection with plots such as those of FIG. 2A, 2B, 3A, 3B, 4A, 4B. The plot of FIG. 7C, although theoretically corresponding to no flow, shows some characteristic representative of the flow; this is due to the design of the algorithm hereabove referred to, which in any case solves for a flowing profile, even when none exists.

When the flow velocity is very low, such as e.g. below 3 or 4 feet/minute, it might be difficult to calculate the velocity and even assert the existence of any flow. The detection, i.e. the determination of the existence of a water flow, according to another feature of the invention, based on one plot such as one of those shown on FIG. 7A, 7B, 7C, could be carried out by calculating the area of the elongated dark area (700, 701, 702), thus giving a number of counts representative of the flow, and comparing said number of counts to a predetermined threshold number of counts. Any actual number of counts below this threshold is thus interpreted as the absence of flow, or of any flow of significance. By way of example, this threshold could be set at seventy (70) counts, in connection with the example of the set of FIG. 7A, 7B and 7C, it being understood that this threshold is dependent upon the neutron source output.

While the velocity is related to the position on the time axis on the plots, of an anomaly or characteristic

representative of the flow, flow rate affects the area of said characteristic.

Apart from the detection of the flow and the calculation of the flow velocity, the invention further permits one to determine the water flow rate. Actually, the flow rate, along with the location of the water flow in the borehole, is the information of most importance for the user.

According to a first embodiment, the flow rate "Q" is determined by the following formula:

$$Q = C_{flow} / S_{total} \times F(V, d, r_d, L_d, T_{act}, BHOD, Ksing)$$

where "$C_{flow}$" is the number of counts in the characteristic which is representative of the flow, "$S_{total}$" is the total number of neutrons emitted during the irradiating period, "V" and "d" have already been defined, "$r_d$" is the radius of the detector, "$L_d$" is the length of the detector, "$T_{act}$" is the irradiating period, "BHOD" includes borehole compensation factors, and "Ksing" is a parameter characteristic of the casing diameter and density. The function "F" is determined in a laboratory, by measuring the response of the logging tool upon different environmental conditions. "$C_{flow}$" can be determined as the area of the characteristic which is representative of the flow, such as the peak shown on FIG. 2A, 2B, 3A, 3B, or the elongated dark zone 700, 701, 702 on FIG. 7A, 7B, 7C. It is meant here by "area" the area of the characteristic delimited by the exponential decay curve. In the example of FIG. 5A, 5B and 6, the "$C_{flow}$" area corresponds to the dark zone, while in the example of FIG. 4A, 4B the "$C_{flow}$" area corresponds to the shaded zone. "$S_{total}$" can be calculated by any known method, either in a laboratory setup, or in situ during the measurement in the well. By way of example, the method described in U.S. Patent 4,760,252 assigned to Schlumberger Technology Corporation, might be suitable.

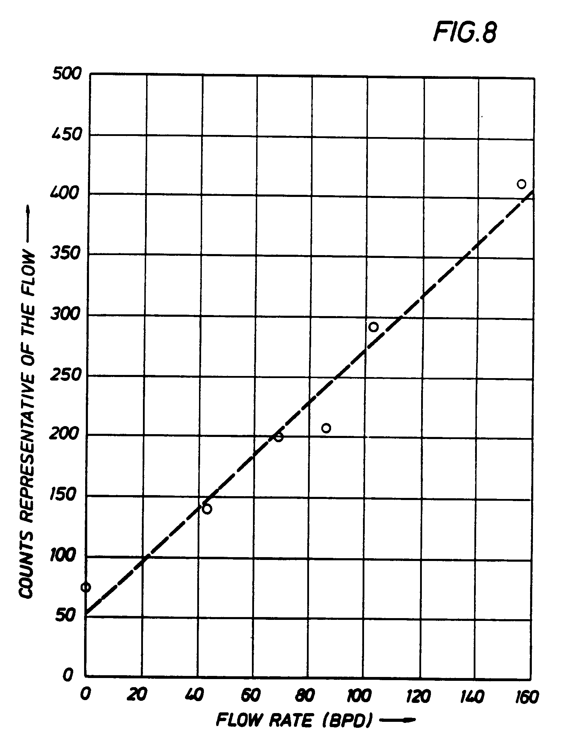

According to a second embodiment especially suitable but not exclusively to flow having low velocity, the flow rate "Q" can be determined through the steps described hereafter in relation to FIG. 7A, 7B, 7C and FIG. 8. FIG. 8 shows a plot of counts representative of the flow, versus flow rate (measured in barrel per day; 100 barrels are sensibly equivalent to 15.9 m$^3$). The plot of FIG. 8 is a reference plot made prior to measurements, either by using a laboratory setup or by modelling calculations. According to the invention, it has been discovered that, at least for the low velocities, the counts (representative of the flow) are linearly related to the flow rate. Once an actual plot of count rates versus time (as measured) has been obtained, the area of the characteristic representative of the flow on said actual plot is then calculated, giving an actual number of counts representative of the flow. The actual flow rate is then determined by locking on the reference plot of FIG. 8, for the flow rate value corresponding to said actual number of counts.

All the plots and histograms on the drawing have been made for given radial distances of the flow from the apparatus. Radial distance of the flow may be determined by any usual method involving window energy measurements.

The irradiating period may be provided by either continuous neutrons emission or successive bursts of neutrons. In the preferred embodiment of the invention, the gamma rays are counted after the source is deactivated, and thus high count efficiency is obtained. Alternatively, detection of counts could also be carried out during the irradiating period, i.e. during the time period separating successive bursts of neutrons. This counting could be useful for providing supplemental information for the build-up of the plots of counts versus time, and thus for the determination of the characteristic representative of the flow, especially in connection with FIG. 4A and 4B.

Furthermore, the figures and the relating description depict a specific respective disposition of the source, the detector(s) and the water flow direction, to wit the line passing through the source and the detector(s) being parallel to the water flow direction. This corresponds to the use of the method and apparatus of the invention in a well. However, the invention could also be implemented in such a way that the source / detector(s) line is inclined at a given angle, or substantially perpendicular, to the water flow direction.

A further advantage of the invention, consists of the possibility of using existing nuclear logging tool at the cost of slight modifications.

Although the invention has been described and illustrated with reference to a specific embodiment thereof, it will be understood by those skilled in the art that various modifications and variations of that embodiment may be made without departing from the invention concepts disclosed. Accordingly, all such modifications are intended to be included within the scope of the appended claims.

## Claims

1. A nuclear method for obtaining qualitative and quantitative information related to water flow, comprising the steps of:

    irradiating the water flow with a source of neutrons of sufficient energy to interact with oxygen atoms in the water, according to the activation reaction $O^{16}(n,p)N^{16}$ and wherein the duration of said irradiating step is comprised between one-fifth of and three $N^{16}$ half-lives;

interrupting said irradiating step;

detecting, during cessation of said irradiation, at a location spaced from said source, the gamma rays emitted during disintegration of $N^{16}$ atoms and wherein the duration of said detecting step is at least one $N^{16}$ half-life;

counting the gamma rays detected during said cessation period so as to establish a relationship of counts versus time; and

deriving from said relationship information related to said water flow.

2. The method according to claim 1, wherein said irradiating step is cyclically started and interrupted.

3. The method according to claim 2, further including carrying out, at the same location in the borehole, successive cycles of irradiating / detecting steps.

4. The method according to claim 1, comprising:

determining in said relationship a characteristic which is representative of the water flow and which departs from the exponential decay curve of $N^{16}$ atoms featuring the stationary oxygen; and

calculating the velocity "V" of the water flow from the formula $V = d / t$, where "d" is the distance between the source and the detecting location, and "t" is a time period between the irradiating step and the time corresponding to said characteristic.

5. The method according to claim 4, wherein:

said characteristic includes a peak; and

said time period "t" starts from the mid-time of said irradiating step and ends at the time corresponding to said peak.

6. The method according to claim 1, further comprising:

determining in said relationship a characteristic which is representative of the water flow and which departs from the exponential decay curve of $N^{16}$ atoms featuring the stationary oxygen;

determining for each of the time intervals related to said characteristic, the number of counts representative of the flow;

summing the number of counts representative of the flow detected in each of said time intervals; and

detecting the presence of water flow by comparing to a predetermined threshold value said number of counts representative of the flow.

7. The method according to claim 6, wherein said relationship is a plot of counts versus time, and said number of counts corresponds, on said plot, to the area of said characteristic delimited by said exponential decay curve.

8. The method according to claim 1, further including the step of deriving the water flow rate "Q" from the formula:

$$Q = F \times C_{flow} / S_{total}$$

where $C_{flow}$ is the number of counts representative of the flow, $S_{total}$ is the total number of neutrons emitted during the irradiating step, and "F" is a function of environmental parameters.

9. The method according to claim 8, further comprising:

determining in said relationship a characteristic which is representative of the water flow and which departs from the exponential decay curve of $N^{16}$ atoms featuring the stationary oxygen;

determining for each of the time intervals related to said characteristic, the number of counts representative of the flow;

deriving $C_{flow}$ from the sum of the number of counts representative of the flow detected in each of said time intervals; and

calculating the flow rate "Q".

10. The method according to claim 9, wherein said relationship is a plot of counts versus time, and $C_{flow}$ is calculated as the area of said characteristic on said plot, delimited by said exponential decay curve.

11. The method according to claim 1, comprising:

establishing, prior to the actual measurements, a reference relationship between the number of counts representative of the flow and the flow rate;

carrying out actual measurements of the water flow under investigation by establishing an actual relationship of counts versus time;

determining from said actual relationship the actual number of counts representative of the actual flow; and

deriving from said actual number of counts and from said reference relationship, the actual flow rate.

12. A nuclear apparatus for obtaining qualitative and quantitative information related to water flow, comprising:

means (22) for irradiating the water flow with a source of neutrons of sufficient energy to interact with oxygen atoms in the water, according to the activation reaction $O^{16}(n,p)N^{16}$; and

means (24) for detecting, at a location spaced from said source, the gamma rays emitted during disintegration of $N^{16}$ atoms; characterized in that:

said irradiating means is is adapted to be actuated between one fifth of and three $N^{16}$ half-lives, then interrupted;

said detecting means (24) is adapted to detect said gamma rays, during cessation of said irradiation for at least one $N^{16}$ half-life; and said apparatus comprises:

means (32, 38) for counting the gamma rays detected during said cessation period so as to establish a relationship of counts versus time; and

means (42) for deriving from said relationship information related to said water flow.

13. The apparatus according to claim 12, wherein said irradiating means (22) is cyclically activated and deactivated.

14. The apparatus according to claim 13, further including means for carrying out, at the same location in the borehole, successive cycles of irradiation / detection.

15. The apparatus according to claim 12, comprising:

means for determining in said relationship a characteristic which is representative of the water flow and which departs from the exponential decay curve of $N^{16}$ atoms featuring the stationary oxygen; and

means for calculating the velocity "V" of the water flow from the formula V = d / t, where "d" is the distance between the source and the detecting location, and "t" is a time period between the irradiation and the time corresponding to said characteristic.

16. The apparatus according to claim 15, wherein:

said characteristic includes a peak; and

said time period "t" starts from the mid-time of the irradiation and ends at the time corresponding to said peak.

17. The apparatus according to claim 12, further comprising:

means for determining in said relationship a characteristic which is representative of the water flow and which departs from the exponential decay curve of $N^{16}$ atoms featuring the stationary oxygen;

means for determining for each of the time intervals related to said characteristic, the number of counts representative of the flow;

means for summing the number of counts representative of the flow detected in each of said time intervals; and

means for detecting the presence of water flow by comparing to a threshold value said number of counts representative of the flow.

18. The apparatus according to claim 17, wherein said relationship is a plot of counts versus time, and said number of counts corresponds, on said plot, to the area of said characteristic delimited by said exponential decay curve.

19. The apparatus according to claim 12, further including means for deriving the water flow rate "Q" from the formula:

$$Q = F \times C_{flow} / S_{total}$$

where $C_{flow}$ is the number of counts representative of the flow, $S_{total}$ is the total number of neutrons emitted during the irradiation, and "F" is a function of environmental parameters.

20. The apparatus according to claim 19, further comprising:

means for determining in said relationship a characteristic which is representative of the water flow and which departs from the exponential decay curve of $N^{16}$ atoms featuring the stationary oxygen;

means for determining for each of the time intervals related to said characteristic, the number of counts representative of the flow;

means for deriving Cflow from the sum of the number of counts representative of the flow detected in each of said time intervals; and

means for calculating the flow rate "Q".

21. The apparatus according to claim 20, wherein said relationship is a plot of counts versus time, and Cflow is calculated as the area of said characteristic on said plot, delimited by said exponential decay curve.

22. The apparatus according to claim 12, comprising:

means for establishing, prior to the actual measurements, a reference relationship between the number of counts representative of the flow and the flow rate;

means for carrying out actual measurements of the water flow under investigation by establishing an actual relationship of counts versus time;

means for determining from said actual relationship the actual number of counts representative of the actual flow; and

means for deriving from said actual number of counts and from said reference relationship, the actual flow rate.


**Patentansprüche**

1. Ein nukleares Verfahren für das Gewinnen qualitativer und quantitativer Information bezüglich Wasserströmung, umfassend die Schritte:

Bestrahlen der Wasserströmung mit einer Neutronenquelle hinreichender Energie, um mit den Sauerstoffatomen in dem Wasser in Wechselwirkung zu treten entsprechend der Aktivierungsreaktion $O^{16}(n,p)N^{16}$, und wobei die Dauer des Bestrahlungsschrittes zwischen einem Fünftel und drei $N^{16}$-Halbwertszeiten liegt;

Unterbrechen des Bestrahlungsschrittes;

während der unterbrochenen Bestrahlung Erfassen an einer von der Quelle beabstandeten Stelle der während des Zerfalls der $N^{16}$-Atome emittierten Gammastrahlen, und wobei die Dauer des Erfassungsschrittes mindestens eine $N^{16}$-Halbwertszeit beträgt;

Zählen der während der Abschaltperiode erfaßten Gammastrahlen, um so eine Beziehung zwischen der Zählung und der Zeit zu etablieren; und

Ableiten von Information bezüglich der Wasserströmung aus der Beziehungsinformation.

2. Das Verfahren nach Anspruch 1, bei dem der Bestrahlungsschritt zyklisch begonnen und unterbrochen wird.

3. Das Verfahren nach Anspruch 2, ferner umfassend das Ausführen aufeinanderfolgender Zyklen von Bestrahlungs/Erfassungsschritten an derselben Stelle in einem Bohrloch.

4. Das Verfahren nach Anspruch 1, umfassend:

das Bestimmen eines Kennwertes in der Beziehung, der repräsentativ ist für die Wasserströmung und der abweicht von der exponentiellen Abklingkurve von $N^{16}$-Atomen bezüglich stationären Sauerstoffs; und

Berechnen der Geschwindigkeit "V" der Wasserströmung aus der Formel $V = d / t$, worin "d" die Distanz zwischen der Quelle und der Erfassungsstelle ist, und "t" eine Zeitperiode zwischen dem Bestrahlungsschritt und der Zeit entsprechend dem Kennwert ist.

5. Das Verfahren nach Anspruch 4, bei dem

der Kennwert eine Spitze umfaßt; und

die Zeitperiode "t" in der Mitte des Bestrahlungsschrittes beginnt und zu dem Zeitpunkt entsprechend der Spitze endet.

6. Das Verfahren nach Anspruch 1, ferner umfassend:

Bestimmen eines Kennwerts in der Beziehung, der repräsentativ ist für die Wasserströmung und der abweicht von der exponentiellen Abklingkurve von $N^{16}$-Atomen entsprechend stationärem Sauerstoff;

Bestimmen für jedes Zeitintervall bezüglich des Kennwerts, der Anzahl von für die Strömung repräsentativen Zählungen;

Aufsummieren der für die Strömung repräsentativen Anzahl von Zählungen, die in jedem Zeitintervall erfaßt wurden; und

Erfassen des Vorhandenseins von Wasserströmung durch Vergleichen der für die Strömung repräsentativen Zählungen mit einem vorbestimmten Schwellenwert.

7. Das Verfahren nach Anspruch 6, bei dem die Beziehung eine Aufzeichnung von Zählungen über der Zeit ist, und die Anzahl von Zählungen der Fläche des Kennwerts entspricht, begrenzt durch die exponentielle Abklingkurve.

8. Das Verfahren nach Anspruch 1, ferner umfassend den Schritt der Ableitung der Wasserströmungsrate "Q" aus der Formel

$$Q = F \times C_{flow} / S_{total}$$

worin $C_{flow}$ die Anzahl von für die Strömung repräsentativen Zählungen ist, $S_{total}$ die Gesamtanzahl von während des Bestrahlungsschritts emittierten Neutronen ist, und "F" eine Funktion von Umgebungsparametern ist.

9. Das Verfahren nach Anspruch 8, ferner umfassend:

Bestimmen eines Kennwerts in der Beziehung, der repräsentativ ist für die Wasserströmung, und der abweicht von der exponentiellen Abklingkurve von $N^{16}$-Atomen bezüglich stationären Sauerstoffs;

Bestimmen der Anzahl von für die Strömung repräsentativen Zählungen für jedes der Zeitintervalle bezüglich des Kennwerts;

Ableiten von $C_{flow}$ aus der Summe der Anzahl von für die Strömung repräsentativen Zählungen, die in jedem der Zeitintervalle erfaßt wurden; und

Berechnen der Strömungsrate "Q".

10. Das Verfahren nach Anspruch 9, bei dem die Beziehung eine Aufzeichnung von Zählungen über der Zeit ist und $C_{flow}$ berechnet wird als Fläche des Kennwerts auf der Aufzeichnung, begrenzt von der exponentiellen Abklingkurve.

11. Das Verfahren nach Anspruch 1, umfassend:

Etablieren, vor den eigentlichen Messungen, einer Referenzbeziehung zwischen der Anzahl von für die Strömung repräsentativen Zählungen und der Strömungsrate;

Ausführen tatsächlicher Messungen der zu untersuchenden Wasserströmung durch Etablieren einer Ist-Beziehung von Zählungen über der Zeit;

Bestimmen der Ist-Anzahl von für die Ist-Strömung repräsentativen Zählungen aus der Ist-Beziehung; und

Ableiten der Ist-Strömungsrate aus der Ist-Anzahl von Zählungen und aus der Referenzbeziehung.

12. Eine nukleare Vorrichtung für die Gewinnung qualitativer und quantitativer Information bezüglich Wasserströmung, umfassend:

Mittel (22) für das Bestrahlen der Wasserströmung mit einer Quelle von Neutronen hinreichender Energie für die Wechselwirkung mit Sauerstoffatomen in dem Wasser entsprechend der Aktivierungsreaktion $O^{16}(n,p)N^{16}$; und

Mittel (24) für das Erfassen an einer von der Quelle beabstandeten Stelle der Gammastrahlen, die während des Zerfalls von $N^{16}$-Atomen emittiert werden; dadurch gekennzeichnet,

daß das Bestrahlungsmittel ausgebildet ist, um zwischen einem Fünftel und drei $N^{16}$-Halbwertszeiten aktiviert zu werden und dann unterbrochen zu werden;

daß die Erfassungsmittel (24) ausgebildet sind zum Erfassen der Gammastrahlen während ausgeschalteter Bestrahlung während mindestens einer $N^{16}$-Halbwertszeit; und daß die Vorrichtung umfaßt:

Mittel (32, 38) für das Zählen der Gammastrahlen, erfaßt während der Ausschaltperiode, um so eine Beziehung von Zählungen über der Zeit zu etablieren; und

Mittel (42) für das Ableiten von Information bezüglich der Wasserströmung aus der Beziehung.

13. Die Vorrichtung nach Anspruch 12, bei der das Bestrahlungsmittel (22) zyklisch aktiviert und deaktiviert wird.

14. Die Vorrichtung nach Anspruch 13, ferner umfassend Mittel für das Ausführen aufeinanderfolgender Bestrahlungs/Erfassungszyklen an derselben Stelle in dem Bohrloch.

15. Die Vorrichtung nach Anspruch 12, umfassend:

Mittel für das Bestimmen eines Kennwerts in der Beziehung, der repräsentativ ist für die Wasserströmung und abweicht von der exponentiellen Abklingkurve von $N^{16}$-Atomen bezüglich stationären Sauerstoffs; und

Mittel für das Berechnen der Geschwindigkeit "V" der Wasserströmung aus der Formel V = d / t, worin "d" der Abstand zwischen der Quelle und der Erfassungsstelle ist, und "t" eine Zeitperiode ist zwischen der Bestrahlung und der Zeit entsprechend dem Kennwert.

16. Die Vorrichtung nach Anspruch 15, bei der

der Kennwert eine Spitze umfaßt; und

die Zeitperiode "t" in der Mitte der Bestrahlungszeit beginnt und am Zeitpunkt entsprechend der Spitze endet.

17. Die Vorrichtung nach Anspruch 12, ferner umfassend:

Mittel für das Bestimmen eines Kennwerts in der Beziehung, der repräsentativ ist für die Wasserströmung und abweicht von der exponentiellen Abklingkurve von $N^{16}$-Atomen bezüglich stationären Sauerstoffs;

Mittel für das Bestimmen für jedes der Zeitintervalle bezüglich des Kennwerts der Anzahl von für die Strömung repräsentativen Zählungen;

Mittel für das Aufsummieren der Anzahl von für die Strömung repräsentativen Zählungen, erfaßt in jedem der Zeitintervalle; und

Mittel für das Erfassen des Vorhandenseins von Wasserströmung durch Vergleich der für die Strömung repräsentativen Zählungen mit einem Schwellenwert.

18. Die Vorrichtung nach Anspruch 17, bei der die Beziehung eine Aufzeichnung von Zählungen über der Zeit ist, und die Anzahl von Zählungen in der Aufzeichnung der Fläche des Kennwerts entspricht, begrenzt durch die exponentielle Abklingkurve.

19. Die Vorrichtung nach Anspruch 12, ferner umfassend Mittel für die Ableitung der Wasserströmungsrate "Q" aus der Formel:

$$Q = F \times C_{flow} / S_{total}$$

worin $C_{flow}$ die Anzahl von für die Strömung repräsentativen Zählungen ist, $S_{total}$ die Gesamtzahl von während der Bestrahlung emittierten Neutronen ist, und "F" eine Funktion von Umgebungsparametern ist.

20. Die Vorrichtung nach Anspruch 19, ferner umfassend:

Mittel für das Bestimmen eines Kennwerts in der Beziehung, der für die Wasserströmung repräsentativ ist und abweicht von der exponentiellen Abklingkurve von $N^{16}$-Atomen bezüglich stationären Sauerstoffs;

Mittel für die Bestimmung für jedes der Zeitintervalle bezüglich des Kennwerts, der Anzahl von für die Strömung repräsentativen Zählungen;

Mittel für das Ableiten von Cflow aus der Summe der Anzahl von für die Strömung repräsentativen Zählungen, die in jedem der Zeitintervalle erfaßt wurden; und

Mittel für das Berechnen der Strömungsrate "Q".

21. Die Vorrichtung nach Anspruch 20, bei der die Beziehung eine Aufzeichnung von Zählungen über der Zeit ist, und Cflow berechnet wird als die Fläche des Kennwerts auf der Aufzeichnung, begrenzt von der exponentiellen Abklingkurve.

22. Die Vorrichtung nach Anspruch 12, umfassend:

Mittel für das Etablieren, vor den eigentlichen Messungen, einer Referenzbeziehung zwischen der Anzahl von für die Strömung repräsentativen Zählungen und der Strömungsrate;

Mittel für das Ausführen der eigentlichen Messungen der zu untersuchenden Wasserströmung durch Etablieren einer Ist-Beziehung von Zählungen über der Zeit;

Mittel für das Bestimmen der Ist-Anzahl von für die Ist-Strömung repräsentativen Zählungen aus der Ist-Beziehung; und

Mittel für das Ableiten der Ist-Strömungsrate aus der Ist-Anzahl von Zählungen und der Referenzbeziehung.

## Revendications

1. Procédé nucléaire pour obtenir des informations qualitatives et quantitatives se rapportant à un courant d'eau, comprenant les étapes de :
   - irradiation du courant d'eau avec une source de neutrons d'énergie suffisante pour créer des interactions avec des atomes d'oxygène dans l'eau, selon la réaction d'activation $O^{16}(n,p)N^{16}$, et dans lequel la durée de ladite étape d'irradiation est comprise entre un cinquième d'une et trois demi-vies de $N^{16}$;
   - interruption de ladite étape d'irradiation;
   - détection, durant la cessation de ladite irradiation, à une position espacée à partir de ladite source, des rayons gamma émis durant la désintégration d'atomes de $N^{16}$ et dans lequel la durée de ladite étape de détection est au moins d'une demi-vie de $N^{16}$;
   - comptage des rayons gamma détectés durant ladite période de cessation, de manière à établir une relation entre les comptes et le temps; et
   - déduction, à partir de ladite relation, d'informations se rapportant audit courant d'eau.

2. Procédé selon la revendication 1, dans lequel ladite étape d'irradiation débute et est interrompue de façon cyclique.

3. Procédé selon la revendication 2, incluant de plus l'exécution, à la même position dans le trou de sondage, de cycles successifs d'étapes d'irradiation/ détection.

4. Procédé selon la revendication 1, comprenant :
   - la détermination, dans ladite relation, d'une caractéristique qui est représentative du courant d'eau et qui s'écarte de la courbe de décroissance exponentielle d'atomes de $N^{16}$ représentant l'oxygène stationnaire; et
   - le calcul de la vitesse "V" du courant d'eau à partir de la formule V = d/t, où "d" est la distance entre la source et la position de détection, et "t" est une période de temps entre l'étape d'irradiation et le temps correspondant à ladite caractéristique.

5. Procédé selon la revendication 4, dans lequel :
   - ladite caractéristique inclut un pic; et
   - ladite période de temps "t" débute à partir du temps moyen de ladite étape d'irradiation et finit au temps correspondant audit pic.

6. Procédé selon la revendication 1, comprenant de plus :
   - la détermination, dans ladite relation, d'une caractéristique qui est représentative du courant d'eau et qui s'écarte de la courbe de décroissance exponentielle d'atomes de $N^{16}$ représentant l'oxygène stationnaire;
   - la détermination, pour chacun des intervalles de temps se rapportant à ladite caractéristique, de la valeur de comptage représentative du courant;
   - l'addition des valeurs de comptage représentatives du courant détecté dans chacun desdits intervalles de temps; et
   - la détection de la présence du courant d'eau en comparant à une valeur de seuil prédéterminée ladite valeur de comptage représentative du courant.

7. Procédé selon la revendication 6, dans lequel ladite relation est un tracé des comptes par rapport au temps, et ladite valeur de comptage correspond, sur ledit tracé, à l'aire de ladite caractéristique délimitée par ladite courbe de décroissance exponentielle.

8. Procédé selon la revendication 1, incluant de plus l'étape de déduction du débit de l'eau "Q" à partir de la formule :

$$Q = F \times C_{courant} / S_{total},$$

où $C_{courant}$ est la valeur de comptage représentative du courant, $S_{total}$ est le nombre total de neutrons émis durant l'étape d'irradiation, et "F" est une fonction de paramètres de l'environnement.

9. Procédé selon la revendication 8, comprenant de plus :
   - la détermination, dans ladite relation, d'une caractéristique qui est représentative du courant d'eau et qui s'écarte de la courbe de décroissance exponentielle d'atomes de $N^{16}$ représentant l'oxygène stationnaire;
   - la détermination, pour chacun des intervalles de temps se rapportant à ladite caractéristique, de la valeur de comptage représentative du courant;
   - la déduction de $C_{courant}$ à partir de l'addition des valeurs de comptage représentatives du courant détecté dans chacun desdits intervalles de temps; et
   - le calcul du débit "Q".

10. Procédé selon la revendication 9, dans lequel ladite relation est un tracé des comptes par rapport au temps, et $C_{courant}$ est calculé comme étant l'aire de ladite caractéristique sur ledit tracé, délimitée par ladite courbe de décroissance exponentielle.

11. Procédé selon la revendication 1, comprenant :
    - l'établissement, préalablement aux mesures réelles, d'une relation de référence entre la valeur de comptage représentative du courant et le débit;
    - l'exécution de mesures réelles du courant d'eau examiné en établissant une relation réelle entre les comptes et le temps;
    - la détermination, à partir de ladite relation réelle, de la valeur de comptage réelle représentative du courant réel; et
    - la déduction, à partir de ladite valeur de comptage réelle et de ladite relation de référence, du débit réel.

12. Dispositif nucléaire pour obtenir des informations qualitatives et quantitatives se rapportant à un courant d'eau, comprenant :
    - des moyens (22) d'irradiation du courant d'eau avec une source de neutrons d'énergie suffisante pour créer des interactions avec des atomes d'oxygène dans l'eau, selon la réaction d'activation $O^{16}(n,p)N^{16}$; et
    - des moyens (24) de détection, à une position espacée à partir de ladite source, des rayons gamma émis durant la désintégration d'atomes de $N^{16}$; caractérisé en ce que :
    - lesdits moyens d'irradiation sont adaptés pour être actionnés à partir d'un cinquième d'une jusqu'à trois demi-vies de $N^{16}$, puis interrompus;
    - lesdits moyens de détection (24) sont adaptés à la détection desdits rayons gamma, durant la cessation de ladite irradiation pendant au moins une demi-vie de $N^{16}$; et ledit dispositif comprend :
    - des moyens (32,38) de comptage des rayons gamma détectés durant ladite période de cessation, de manière à établir une relation entre les comptes et le temps; et
    - des moyens (42) de déduction, à partir de ladite relation, d'informations se rapportant audit courant d'eau.

13. Dispositif selon la revendication 12, dans lequel lesdits moyens d'irradiation (22) sont activés et désactivés de façon cyclique.

14. Dispositif selon la revendication 13, incluant de plus des moyens d'exécution, à la même position dans le trou de sondage, de cycles successifs d'irradiation/ détection.

15. Dispositif selon la revendication 12, comprenant :
    - des moyens de détermination, dans ladite relation, d'une caractéristique qui est représentative du courant d'eau et qui s'écarte de la courbe de décroissance exponentielle d'atomes de $N^{16}$ représentant l'oxygène stationnaire; et
    - des moyens de calcul de la vitesse "V" du courant d'eau à partir de la formule V = d/t, où "d" est la distance entre la source et la position de détection, et "t" est une période de temps entre l'étape d'irradiation et le temps correspondant à ladite caractéristique.

16. Dispositif selon la revendication 15, dans lequel :
    - ladite caractéristique inclut un pic; et
    - ladite période de temps "t" débute à partir du temps moyen de l'irradiation et finit au temps correspondant audit pic.

16

17. Dispositif selon la revendication 12, comprenant de plus :
    - des moyens de détermination, dans ladite relation, d'une caractéristique qui est représentative du courant d'eau et qui s'écarte de la courbe de décroissance exponentielle d'atomes de $N^{16}$ représentant l'oxygène stationnaire;
    - des moyens de détermination, pour chacun des intervalles de temps se rapportant à ladite caractéristique, de la valeur de comptage représentative du courant;
    - des moyens d'addition des valeurs de comptage représentatives du courant détecté dans chacun desdits intervalles de temps; et
    - des moyens de détection de la présence d'un courant d'eau en comparant à une valeur de seuil ladite valeur de comptage représentative du courant.

18. Dispositif selon la revendication 17, dans lequel ladite relation est un tracé des comptes par rapport au temps, et ladite valeur de comptage correspond, sur ledit tracé, à l'aire de ladite caractéristique délimitée par ladite courbe de décroissance exponentielle.

19. Dispositif selon la revendication 12, incluant de plus des moyens de déduction du débit de l'eau "Q" à partir de la formule :
$$Q = F \times C_{courant} / S_{total},$$
    où $C_{courant}$ est la valeur de comptage représentative du courant, $S_{total}$ est le nombre total de neutrons émis durant l'irradiation, et "F" est une fonction de paramètres de l'environnement.

20. Dispositif selon la revendication 19, comprenant de plus :
    - des moyens de détermination, dans ladite relation, d'une caractéristique qui est représentative du courant d'eau et qui s'écarte de la courbe de décroissance exponentielle d'atomes de $N^{16}$ représentant l'oxygène stationnaire;
    - des moyens de détermination, pour chacun des intervalles de temps se rapportant à ladite caractéristique, de la valeur de comptage représentative du courant;
    - des moyens de déduction de $C_{courant}$ à partir de l'addition des valeurs de comptage représentatives du courant détecté dans chacun desdits intervalles de temps; et
    - des moyens de calcul du débit "Q".

21. Dispositif selon la revendication 20, dans lequel ladite relation est un tracé des comptes par rapport au temps, et $C_{courant}$ est calculé comme étant l'aire de ladite caractéristique sur ledit tracé, délimitée par ladite courbe de décroissance exponentielle.

22. Dispositif selon la revendication 12, comprenant :
    - des moyens d'établissement, préalablement aux mesures réelles, d'une relation de référence entre la valeur de comptage représentative du courant et le débit;
    - des moyens d'exécution de mesures réelles du courant d'eau examiné en établissant une relation réelle entre les comptes et le temps;
    - des moyens de détermination, à partir de ladite relation réelle, de la valeur de comptage réelle représentative du courant réel; et
    - des moyens de déduction, à partir de ladite valeur de comptage réelle et de ladite relation de référence, du débit réel.

FIG.1

FIG.2A

NEAR DETECTOR

- - - STATIONARY
········· FLOWING
——— TOTAL

FIG.2B

FAR DETECTOR

- - - STATIONARY
········· FLOWING
——— TOTAL

19

EP 0 421 844 B1

FIG.3A

NEAR DETECTOR

- - - STATIONARY
- - - - - FLOWING
—— TOTAL

FIG.3B

FAR DETECTOR

- - - STATIONARY
- - - - - FLOWING
—— TOTAL

20

EP 0 421 844 B1

FIG.4A

NEAR DETECTOR

- STATIONARY
- FLOWING
- TOTAL

FIG.4B

FAR DETECTOR

- STATIONARY
- FLOWING
- TOTAL

21

# FIG.5A

NEAR DETECTOR

Labels in figure: IRRADIATION PERIOD 609, FLOWING 605, 607, STATIONARY 603, BACKGROUND

COUNT RATE →
TIME (sec) →

# FIG.5B

FAR DETECTOR

Labels in figure: IRRADIATION PERIOD 610, FLOWING 606, 608, STATIONARY 604, BACKGROUND

COUNT RATE →
TIME (sec) →

EP 0 421 844 B1

FIG.6

FIG.7A

FIG.7B

FIG.7C

FIG.8